# EUROPÄISCHE PATENTSCHRIFT

(11) **EP 1 738 208 B1**
(45) Veröffentlichungstag und Bekanntmachung des Hinweises auf die Patenterteilung: **02.10.2013**
(21) Anmeldenummer: 05731503.8
(22) Anmeldetag: 21.04.2005
(51) Int. Cl.: G02B 6/38

(54) **KUNSTSTOFF-FERRULE**
PLASTIC FERRULE
FERRULE EN PLASTIQUE

(30) Priorität: 22.04.2004 CH 706042004
(43) Veröffentlichungstag der Anmeldung: 03.01.2007
(73) Patentinhaber: Reichle & De-Massari AG, 8622 Wetzikon (CH)
(72) Erfinder: LEUTWYLER, Werner, CH-8053 Zürich (CH); FRIEDRICH, Giorgio, CH-8442 Hettlingen (CH); ECKSTEIN, Oliver, CH-8340 Hinwil (CH); WEBER, Rolf, CH-8427 Freienstein-Teusen (CH)
(74) Vertreter: Daub, Thomas
(86) Internationale Anmeldenummer: PCT/CH2005/000224
(87) Internationale Veröffentlichungsnummer: WO 2005/103785

(56) Entgegenhaltungen:
- EP-A1- 1 058 139
- DE-C1- 19 529 527
- US-A- 5 252 494
- US-A1- 2002 096 284
- US-A1- 2003 070 257
- PATENT ABSTRACTS OF JAPAN Bd. 014, Nr. 211 (C-0715), 2. Mai 1990 (1990-05-02) & JP 02 048434 A (SUMITOMO ELECTRIC IND LTD), 19. Februar 1990 (1990-02-19)

## Beschreibung

Die vorliegende Erfindung betrifft eine Kunststoff-Ferrule für optische Verbindungssysteme nach dem Oberbegriff des Anspruchs 1.

Moderne Datenübertragungssysteme machen heute vermehrt Gebrauch von optischen Systemen mit Lichtwellenleitern. Dabei werden für die Kopplungsstellen hohe Anforderungen an die geometrische Präzision und thermische Stabilität gestellt, welche mit Hilfe sogenannter Ferrulen gewährleistet werden sollen. Diese Ferrulen sind in optischen Verbindungssystemen eingebaut/integriert und dienen insbesondere der radialen Zentrierung und der axialen Positionierung und Lagerung der Lichtwellenleiter. Anordnungen (z.B. Geometrie und Glattheit der Stirnfläche) und physikalische Parameter (z.B. Anpressdruck im Bereich der elastischen Deformation) zur optischen Kopplung von Lichtwellenleitern für die Nachrichtenübermittlung sind durch Normen, wie bspw. die IEC 61754-x, oder die IEC 61755-x Norm standardisiert.

Traditionellerweise wird für die Fertigung derartiger Ferrulen ein hartes Metall oder eine geeignete metallische Legierung verwendet, wie dies bspw. in der US2003/0002817 beschrieben wird. Die Bearbeitung derartiger Materialien erfordert komplexe und mehrstufige maschinelle und aufwändige manuelle Fertigungsschritte.

Es ist aber auch bekannt, derartige Ferrulen aus einem keramischen Werkstoff herzustellen. So offenbart die US-6,358,874 die Verwendung eines zirkoniumhaltigen Keramikmaterials mit ausserordentlicher Härte und Abriebfestigkeit. Die geringe Reibkraft dieses Materials erlaubt zwar das einfache Einführen des Wellenleiters in die Ferrule, macht aber einen Klebvorgang für die Befestigung des Wellenleiters in der Ferrule erforderlich.

In der US-6,533,469 wird eine Ferrule beschrieben, welche eine Spitze aus Keramik und einen Ferrulenkörper aus einem Kunststoff aufweist, wobei auch bei dieser Ferrule der Wellenleiter mit einem geeigneten Kleber befestigt wird. Darüber hinaus weist Keramikmaterial physikalische Eigenschaften auf, welche eine Bearbeitung in unerwünschter Weise erschweren und aufwändig werden lassen.

Um Ferrule und Wellenleiter in einfacher und sicherer Weise miteinander verbinden zu können, wurde bspw. in der EP-1'180'248 vorgeschlagen, Lichtwellenleiter aus Kunststoff mittels Laserverschweissung an optisch transparenten Ferrulen zu befestigen. Leider hat sich auch dieses Verfahren nicht bewährt, insbesondere weil längerfristig Diffusionserscheinungen die Transmissionseigenschaften des Lichtwellenleiters beeinträchtigen.

Es ist deshalb Aufgabe der vorliegenden Erfindung, eine Ferrule zu schaffen, welche die Nachteile der genannten Ferrulen nicht aufweist und insbesondere eine einfache Fertigung erlaubt und eine längerfristig uneingeschränkte Funktionsfähigkeit gewährleistet.

Diese Aufgabe wird erfindungsgemäss durch eine Kunststoff-Ferrule mit den Merkmalen des Anspruchs 1 gelöst und insbesondere durch die Verwendung einer giessfähigen Vergussmasse, welche mindestens in einem oberflächenkonditionierten Teilbereich des Lichtwellenleiters an diesem kraftschlüssig haftet.

Das Konditionieren von Oberflächen zur Erzeugung einer kraftschlüssigen Haftung ist dem Fachmann, bspw. aus dem Handbuch "Werkstoffe, Füllungs- und Verblendkunststoffe", insbesondere aus dem Kapitel aus dem Werkstoffkundeskript der Fachgruppe Zahnmedizin der Universität Marburg von Björn Richter zu Haftvermittlern und Silanisierung, hinlänglich bekannt. Es sei dazu an dieser Stelle auch auf die Publikation Walter G. McDonough et al. "Interfacial shear strenghts of dental resin-glass fibers by the microbond test", National Institut of Standards and Technology, Polymer Division, Gaithersburg, MD 20899, USA, online available since September 19, 2001, hingewiesen. Eine allgemeinere Einführung in die Techniken zur Modifizierung von Oberflächen ist in der Dissertation der Fakultät für Chemie und Pharmazie der Eberhard-Karls-Universität Tübingen "Modifizierung von Oberflächen für die thermodynamische und kinetische Charakterisierung biomolekularer Erkennung mit optischen Transducern" von Jacob Piehler, 1997 zu finden. Diese Haftvermittler bilden in der Regel eine äusserst dünne, molekulare Beschichtung von weniger als 0.1 µm.

Als Vergussmasse für die erfindungsgemässe Ferrule werden bevorzugt kalt vergiessfähige Werkstoffe verwendet und sollen keine Werkstoffe verwendet werden, die unter Wärme und Druck verspritzt werden müssen, wie bspw. selbstverstärkende teilkristalline Polymere, insbesondere LCP (Liquid Crystal Polymer). Vielmehr sollen Werkstoffe verwendet werden, wie sie in der Zahntechnik für die Herstellung von Zahnersatz, Zahnfüllungen oder restaurative Befestigungen verwendet werden. Dazu eignen sich insbesondere giessfähige Werkstoffe auf Basis von Kunststoff-Giessharz oder auf Basis von Acrylat, vorzugsweise Methacrylat oder Methylmetacrylat (geeignete Monomere, Stabilisatoren, Inhibitoren und Füllstoffe sind dem Fachmann hinlänglich bekannt und sind nicht Gegenstand der vorliegenden Erfindung). Für die vorliegende Erfindung werden bevorzugt Licht härtbare, polymerisierende Werkstoffe verwendet. Es versteht sich, dass auch giessfähige Werkstoffe verwendbar sind, deren Aushärtung mit Ultraschall oder anderen Energieformen, insbesondere ohne Wärmezufuhr, aktiviert werden kann. So sind auf dem Gebiet der technischen Kunststoffe auch lichtpolymerisierende und modellierfähige Kunststoffe bekannt, welche sich nach deren Applikation mittels verschiedenster Initiatoren vollständig härten lassen. Zusätze um die erforderlichen physikalischen Eigenschaften zu optimieren sind dem Fachmann auf diesem Gebiet hinlänglich bekannt und können in gewünschter Weise beigemischt werden. Darüber hinaus können auch abrasionsfeste Kompomere verwendet werden. Derartige Kompomere werden in der konservierenden Zahnheilkunde neben modernen Kompositwerkstoffen immer häufiger eingesetzt und sind dem Fachmann hinreichend bekannt. Diese Kompomere unterscheiden sich durch die neben der Polymerisation ablaufende Säure- Basereaktion der entsprechenden Monomer- und Füllstoffanteile von den klassischen Kompositen. Kompomere auf Vinyl-Phosphonsäure-Basis haben sich als abrasionsfeste Werkstoffe besonders bewährt.

Es versteht sich insbesondere, dass die Vergussmasse mit härtenden Zusätzen versehen sein kann und die Vergussmasse so gewählt wird, dass diese den Brechungsindex des Lichtwellenleiter langzeitig nicht verändert. Dabei bildet die erfindungsgemässe Oberflächenkonditionierung, d.h. das Aufbringen eines Haftvermittlers, insbesondere die Silanisierung einen ausgeprägten Schutz vor Diffusionserscheinungen zwischen Vergussmasse und Lichtwellenleiter.

Für die Herstellung eines Ausführungsbeispiels der erfindungsgemässen Ferrule wurde eine Vergussmasse aus der Familie der in der Zahnheilkunde bekannten Füllungswerkstoffe, resp. restaurativen Befestigungswerkstoffe aus Kunststoff verwendet. Diese auf einer Polymerbasis bestehenden Werkstoffe lassen sich in einfacher Weise vergiessen und müssen nicht unter Druck ausgehärtet werden. Diese Werkstoffe entsprechen den Kriterien des Internationalen Sandards ISO 4049. Eine für die erfindungsgemässe Ferrule geeignete Vergussmasse aus dieser Familie weist folgende Eigenschaften auf:

| | |
|---|---|
| Poissonzahl: | ν = 0.3 - 0.035 |
| E-Modul: | η = 70-200 GPa, vorzugsweise η > 150 GPa, |
| Härte: | HV = 350 - 450 N/mm², vorzugsweise 6.5 Mohs |
| Druckfestigkeit. | σ = 200-300 N/mm², |
| Wasserlöslichkeit: | L < 1 µg/mm³, |
| Wasseraufnahme: | A < 25 µg/mm³, |

und insbesondere:

| | |
|---|---|
| spezifische Wärme: | Cₚ = 500 J/kg K, |
| Wärmeleitfähigkeit: | λ > 3 W/mK, |
| linearer Ausdehnungskoeffizient: | α < 8 × 10⁻⁶/K, |
| Körnung: | κ< 0.1 µm, |

Eine bevorzugte Vergussmasse auf Harzbasis weist folgende Eigenschaften auf:

| | |
|---|---|
| Biegefestigkeit: | σ = 120 N/mm². |
| Biegemodul: | B = 6000 N/mm², |
| Wasseraufnahme: | A = 22.0 µg/mm³, |
| Wasserlöslichkeit: | L < 1.0 µg/mm³, |
| Röntgenopazität: | O = 160% Al |
| Durchhärtungstiefe: | h > 6 mm |
| Druckfestigkeit: | σ = 270 N/mm², |
| Transparenz: | T = 15-23 % (je nach Opazität) |

Die obengenannten Werkstoffe können Druck- und Scherkräfte von bis zu 100 kN aufnehmen, sind säureresistent und temperaturbeständig. Die Formstabilität und Langlebigkeit wird durch deren Wasseraufnahmeresistenz gewährleistet.

Die genannten Werte für die spezifische Wärme, die Wärmeleitfähigkeit und den linearen Ausdehnungskoeffizienten erweisen sich als wichtig im Zusammenhang mit der von den Lichtwellenleitern zu übertragenden hohen Leistungsdichte von mehreren 100 kW/cm². Die Werte für die Körnung, das E-Modul und die Poisson-Zahl sind für die Gewährleistung eines mechanisch stabilen und spaltfreien Kontaktes der unter einem vorgegebenen Anpressdruck stehenden Wellenleiter-Stirnfläche erforderlich.

Im folgenden soll die Erfindung mit Hilfe der Figuren näher erläutert werden. Dabei zeigt:
- Figur 1:: Schematischer Längsschnitt durch eine erfindungsgemässe Ferrule;
- Figur 2:: Schematischer Längsschnitt durch einen Stützkörper.

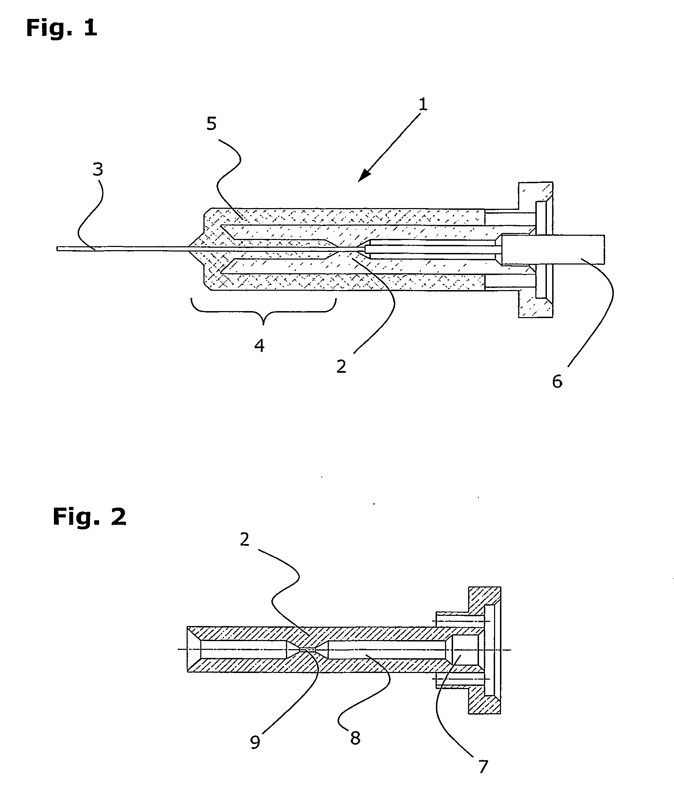

Aus Figur 1 lässt sich der Aufbau einer bevorzugten Ausführungsform einer erfindungsgemässen Ferrule 1 erkennen. Dabei erlaubt ein Stützkörper 2 eine erste Positionierung eines Lichtwellenleiters 3, welcher mindestens in einem Teilbereich 4 oberflächenkonditioniert ist, d.h. mit einem Haftvermittler versehen ist. Diese Konditionierung führt zu einer kraftschlüssigen Haftung des Lichtwellenleiters 3 mit einer diesen Lichtwellenleiter 3 und den Stützkörper 2 umschliessenden Vergussmasse 5. Im oberflächenkonditionierten Teilbereich 4 weist der Haftvermittler eine Schichtdicke von weniger als 1 µm auf, und bildet insbesondere eine Monolayer-Schicht. In einer bevorzugten Ausführungsform ist der oberflächenkonditionierte Teilbereich 4 des Lichtwellenleiters 3 silanisiert.

Figur 2 zeigt die geometrische Ausgestaltung eines Stützkörpers 2 für die bevorzugte Ausführungsform einer erfindungsgemässen Kunststoffferrule 1. Dabei lässt sich der Innenraum dieses Stützkörpers 2 in verschiedene Bereiche unterteilen, einen ersten Bereich 7, in welchem die zu befestigende Faser 6 zu liegen kommt. Ein zweiter Bereich 8 ist geeignet, um die vom Aussenmantel (coating) befreite Faser 6 aufzunehmen, während in einem dritten Bereich 9 der vom Innenmantel (cladding) befreite Lichtwellenleiter 3 geführt wird. Dieser Stützkörper 2 wird zusammen mit dem oberflächenkonditionierten Lichtwellenleiter 3 in einem Giesswerkzeug eingespannt, derart, dass der Lichtwellenleiter 3 zentriert wird und eine Vergussmasse 5 um den zentrierten Lichtwellenleiter 3 und den genau positionierten Stützkörper 2, vergossen werden kann. Dabei geht die Vergussmasse 5 mit dem oberflächenkonditionierten Teilbereich des Lichtwellenleiters 3 eine stabile Haftverbindung ein.

Die Vorteile der Erfindung sind dem Fachmann unmittelbar ersichtlich. Insbesondere wird durch die Verwendung eines derartigen Ferrulen-Aufbaus der Aufwand für die Fertigung einer Ferrule erheblich reduziert. Darüber hinaus lassen sich damit Ferrulen herstellen, deren Fertigungstoleranzen im µm- Bereich oder darunter liegen und deren Lichtwellenleiter innerhalb dieser Fertigungstoleranzen zentriert ist. Das Rohmaterial ist in einfacher Weise verarbeitbar, d.h. kann bspw. kalt vergossen werden. Die ausgehärteten Werkstoffe sind chemisch stabil, d.h. geben keine Stoffe nach aussen ab (Sublimation, Ausgasung), noch nehmen sie Fremdstoffe aus der Atmosphäre auf (Feuchtigkeit). Die in konventioneller Weise gefertigten Ferrulen erfordern in der Regel aufwendige Nachbearbeitungsprozesse, auf welche bei der Verwendung von erfindungsgemässen Vergussmassen verzichtet werden kann. Als erfindungswesentlich erweist sich die Oberflächenbehandlung des Lichtwellenleiters, welche Behandlung bei der Verwendung der obengenannten Vergussmassen keine zusätzliche Klebstoffe erfordert, um den Lichtwellenleiter in der Ferrule zu fixieren.

Die Vereinfachung bei der erfindungsgemässen Fertigung von mit Lichtwellenleitern versehenen Ferrulen unter Verwendung eines Haftvermittlers ist dem Fachmann unmittelbar ersichtlich. Dabei ist die langfristig unbeeinträchtigte Funktionsfähigkeit eines erfindungsgemäss fixierten Lichtwellenleiters wegen des Haftvermittlers gewährleistet, insbesondere weil dieser einen Schutz gegen die Diffusion des Ferrulenkunststoffes in den Lichtwellenleiter wirksam verhindert. Es versteht sich, dass die verwendete Vergussmasse auch nur für einen Teilbereich der Ferrule eingesetzt werden kann.

## Patentansprüche

1. Kunststoff-Ferrule (1) für optische Verbindungssysteme, in welcher Kunststoff-Ferrule (1) ein Lichtwellenleiter (3) klebstofffrei fixiert ist, **dadurch gekennzeichnet, dass** der Lichtwellenleiter (3) mindestens in einem Teilbereich (4) oberflächenkonditioniert ist, d.h. mit einem Haftvermittler versehen ist, derart dass der Lichtwellenleiter (3) mindestens in diesem Teilbereich (4) kraftschlüssig an einer ausgehärteten Vergussmasse (5) der Kunststoff-Ferrule (1) haftet, wobei diese Kunststoff-Ferrule (1) einen Stützkörper (2) aufweist, in welchem der Lichtwellenleiter (3) geführt wird, und welcher Stützkörper (2) mit der diesen Lichtwellenleiter (3) und den Stützkörper (2) umschliessenden Vergussmasse (5) vergossen ist.

2. Kunststoff-Ferrule (1) nach Anspruch 1, **dadurch gekennzeichnet, dass** der Haftvermittler im oberflächenkonditionierte Teilbereich (4) eine Schichtdicke von weniger als 1 µm, vorzugsweise von 100 nm, typischerweise von 10 nm aufweist.

3. Kunststoff-Ferrule (1) nach Anspruch 1 oder 2, **dadurch gekennzeichnet, dass** der oberflächenkonditionierte Teilbereich (4) silanisiert ist.

4. Kunststoff-Ferrule (1) nach einem der Ansprüche 1 bis 3, **dadurch gekennzeichnet, dass** die Vergussmasse (5) eine kalt aushärtende Vergussmasse (5) ist.

5. Kunststoff-Ferrule (1) nach einem der Ansprüche 1 bis 4, **dadurch gekennzeichnet, dass** die Vergussmasse (5) eine lichtpolymerisierende Vergussmasse (5) ist.

6. Kunststoff-Ferrule (1) nach einem der Ansprüche 1 bis 3, **dadurch gekennzeichnet, dass** die Vergussmasse (5) ein auf Acrylat, insbesondere auf Metacrylat basierender Kunststoff ist.

7. Kunststoff-Ferrule (1) nach einem der Ansprüche 1 bis 3, **dadurch gekennzeichnet, dass** die Vergussmasse (5) ein auf Methylmetacrylat basierender Kunststoff ist.

8. Kunststoff-Ferrule (1) nach einem der Ansprüche 1 bis 3, **dadurch gekennzeichnet, dass** die Vergussmasse (5) ein auf härtbarem Giessharz, insbesondere Epoxidharz basierender Werkstoff ist.

9. Kunststoff-Ferrule (1) nach einem der Ansprüche 1 bis 3, **dadurch gekennzeichnet, dass** die Vergussmasse (5) ein auf einem Kompomer basierender Kompositwerkstoff ist.

10. Anwendung eines Silanisierungs-Verfahrens zur Fixierung eines Lichtwellenleiters (3) in einer Kunststoff-Ferrule (1) gemäss Anspruch 1.

## Claims

1. Plastics ferrule (1) for optical interconnection systems, in which plastics ferrule (1) an optical waveguide (3) is gluelessly fixed, **characterized in that** at least in one sub-region (4) the optical waveguide (3) is surface-conditioned, i.e. provided with an adhesion promoter, in such a way that at least in said sub-region (4) the optical waveguide (3) adheres by friction to a hardened casting compound (5) of the plastics ferrule (1), wherein said plastics ferrule (1) comprises a support structure (2) in which the optical waveguide (3) is guided, and said support structure (2) has been encapsulated by use of the casting compound (5) that encloses said optical waveguide (3) and the support structure (2).

2. Plastics ferrule (1) according to Claim 1, **characterized in that** the layer thickness of the adhesion promoter in the surface-conditioned sub-region (4) is less than 1 µm, preferably 100 nm, typically 10 nm.

3. Plastics ferrule (1) according to Claim 1 or 2, **characterized in that** the surface-conditioned sub-region (4) is silanized.

4. Plastics ferrule (1) according to any of Claims 1 to 3, **characterized in that** the casting compound (5) is a low-temperature-hardening casting compound (5).

5. Plastics ferrule (1) according to any of Claims 1 to 4, **characterized in that** the casting compound (5) is a casting compound (5) that is polymerizable by light.

6. Plastics ferrule (1) according to any of Claims 1 to 3, **characterized in that** the casting compound (5) is a plastic based on acrylate, in particular on methacrylate.

7. Plastics ferrule (1) according to any of Claims 1 to 3, **characterized in that** the casting compound (5) is a plastic based on methyl methacrylate.

8. Plastics ferrule (1) according to any of Claims 1 to 3, **characterized in that** the casting compound (5) is a material based on curable casting resin, in particular on epoxy resin.

9. Plastics ferrule (1) according to any of Claims 1 to 3, **characterized in that** the casting compound (5) is a composite material based on a compomer.

10. Use of a silanizing process for the fixing of an optical waveguide (3) in a plastics ferrule (1) according to Claim 1.

## Revendications

1. Ferrule (1) en matériau plastique pour systèmes de raccordement optiques, une fibre optique (3) étant fixée sans colle dans la ferrule (1) en matériau plastique, **caractérisée en ce que** la fibre optique (3) est conditionnée en surface au moins dans une zone partielle (4), c'est-à-dire qu'elle est pourvue d'un promoteur d'adhérence, de manière telle que la fibre optique (3) adhère au moins dans cette zone partielle (4) par liaison à force à une masse de scellement (5) durcie de la ferrule (1) en matériau plastique, cette ferrule (1) en matériau plastique présentant un corps d'appui (2) dans lequel la fibre optique (3) est guidée et le corps d'appui (2) étant coulé avec la masse de scellement (5) entourant cette fibre optique (3) et le corps d'appui (2).

2. Ferrule (1) en matériau plastique selon la revendication 1, **caractérisée en ce que** le promoteur d'adhérence présente, dans la zone partielle (4) à surface conditionnée, une épaisseur de couche inférieure à 1 µm, de préférence de 100 nm, de manière caractéristique de 10 nm.

3. Ferrule (1) en matériau plastique selon la revendication 1 ou 2, **caractérisée en ce que** la zone partielle (4) à surface conditionnée est silanisée.

4. Ferrule (1) en matériau plastique selon l'une quelconque des revendications 1 à 3, **caractérisée en ce que** la masse de scellement (5) est une masse de scellement (5) durcissant à froid.

5. Ferrule (1) en matériau plastique selon l'une quelconque des revendications 1 à 4, **caractérisée en ce que** la masse de scellement (5) est une masse de scellement (5) polymérisant à la lumière.

6. Ferrule (1) en matériau plastique selon l'une quelconque des revendications 1 à 3, **caractérisée en ce que** la masse de scellement (5) est un matériau synthétique à base d'acrylate, en particulier à base de méthacrylate.

7. Ferrule (1) en matériau plastique selon l'une quelconque des revendications 1 à 3, **caractérisée en ce que** la masse de scellement (5) est un matériau synthétique à base de méthacrylate de méthyle.

8. Ferrule (1) en matériau plastique selon l'une quelconque des revendications 1 à 3, **caractérisée en ce que** la masse de scellement (5) est un matériau à base d'une résine de coulée durcissable, en particulier une résine époxyde.

9. Ferrule (1) en matériau plastique selon l'une quelconque des revendications 1 à 3, **caractérisée en ce que** la masse de scellement (5) est un matériau composite à base d'un compomère.

10. Utilisation d'un procédé de silanisation pour la fixation d'une fibre optique (3) dans une ferrule (1) en matériau plastique selon la revendication 1.
